# EUROPEAN PATENT APPLICATION

(11) **EP 4 475 033 A1**
(43) Date of publication of application: **11.12.2024**
(21) Application number: 23177538.8
(22) Date of filing: 06.06.2023
(51) Int. Cl.: G06F 40/30, G06F 16/36, G06F 40/56

(54) **PROVIDING DATA FROM A DIRECTED GRAPH TO A LANGUAGE MODEL**

(71) Applicant: SAP SE, 69190 Walldorf (DE)
(72) Inventor: PORTISCH, Jan, 69190 Walldorf (DE); COSTA, Guilherme, 69190 Walldorf (DE); HLADIK, Michael, 69190 Walldorf (DE)
(74) Representative: Müller-Boré & Partner Patentanwälte PartG mbB

(57) **Abstract**

According to an aspect, a method, a system and a computer program for providing data from a directed graph to a language model are provided. The method comprises defining a plurality of conditions and a plurality of patterns, wherein each of the conditions has at least one corresponding pattern. The method further comprises receiving a subset of the directed graph, wherein the subset of the directed graph includes a plurality of statements, wherein each of the statements includes a subject, an object and a predicate relating the subject to the object. The method further comprises for each of the statements in the subset of the directed graph, performing the following: when one of the conditions matches a respective statement and the pattern corresponding to the condition can be applied to the respective statement, computing a string from the respective statement using the pattern. The method further comprises providing the computed strings as input to the language model.

## Description

The technical field of the present application is databases and data structures. More specifically, disclosed aspects relate to directed graphs, especially knowledge graphs.

An enterprise may have a variety of different products, services, and teams. The enterprise may also have a comprehensive knowledge graph, storing knowledge regarding skills, processes, experiences, capabilities, and insights that are relied upon in day-to-day operations of the enterprise. Contents of the knowledge graph may also include enterprise specific acronyms, departments of the enterprise, and product specifications. The knowledge may enable the enterprise to react to business situations in a fast, professional, and flexible manner. The knowledge graph may be expensive and labor intensive to construct and maintain. The knowledge graph (i.e., semantic web and/or web of linked data) may be specified using the Resource Description Framework (RDF).

In some cases, a user would like to ask questions of or provide tasks to a language model, e.g., a large language model based on a generative pre-trained transformer, such as ChatGPT. However, the language model is typically trained in an unsupervised manner on unlabeled human readable text. Hence, the language model may be unable to directly process a knowledge graph or use a knowledge graph as input, e.g., for training.

Accordingly, it may be desirable to maximize the usability of the knowledge graph, for example, using the knowledge graph as a basis for artificial intelligence applications, more particularly, to train or otherwise improve a language model. Upon training the language model, the language model may be used to answer questions or carry out tasks based on the knowledge stored in the knowledge graph.

In addition, it may be desirable to extract human readable text from the knowledge graph, e.g., for use in explaining answers provided by software (e.g., a process advisor) relying on the knowledge graph.

According to an aspect, a computer implemented method for providing data from a directed graph to a language model is provided. The method comprises defining a plurality of conditions and a plurality of patterns, wherein each of the conditions has at least one corresponding pattern. The method further comprises receiving a subset of the directed graph, wherein the subset of the directed graph includes a plurality of statements. Each of the statements includes a subject, an object and a predicate relating the subject to the object. For each of the statements in the subset of the directed graph, performing the following: when one of the conditions matches a respective statement and the pattern corresponding to the condition can be applied to the respective statement, computing a string for the respective statement using the pattern. Providing the computed strings as input to the language model.

Providing data from the directed graph to the language model may include extracting or reading the data from the directed graph and feeding or sending the data as input to the language model. The statements may be referred to as triples or triple statements, with subject, predicate and object components. A condition may correspond to a respective pattern in the sense that when the condition is determined to be true for a respective statement, it may be determined whether the respective pattern can be applied to the respective statement.

The clause, each of the conditions has at least one corresponding pattern, may be understood to mean that each of the conditions of the plurality of conditions has at least one corresponding pattern of the plurality of patterns. Hence, each one of the conditions of the plurality of conditions may be assigned at least one pattern of the plurality of patterns. Put another way, when a condition has at least one corresponding pattern, the at least one corresponding pattern is assigned to the condition. Moreover, each one of the conditions of the plurality of conditions may be assigned multiple patterns of the plurality of patterns.

The clause, when one of the conditions matches a respective statement and the pattern corresponding to the condition can be applied to the respective statement, may comprise determining whether the at least one pattern corresponding to the condition can be applied to the respective statement. Accordingly, determining whether the at least one pattern corresponding to the condition can be applied to the respective statement may involve determining whether the pattern corresponding to the condition matches the respective statement, i.e., testing whether the respective statement has the characteristics or elements specified by the pattern.

For example, determining whether a pattern can be applied to a statement including a subject may be carried out as follows:
The plurality of conditions may include a first condition:

```
              <?s> <?p> <?o> .
              BIND(sap:BusinessActivity AS <?s>)
              BIND(rdf:type AS <?p>)
```

A first pattern may correspond to the first condition:

```
              The <s.rdfs:label> is a business activity.
```

Since the first pattern includes a reference to a label of a subject s, if the statement including the subject fulfills the first condition, i.e., of being a BusinessActivity, but the subject of the statement does not have a label as required by the first pattern, then the first pattern could not be applied (i.e., would not match) the statement.

Computing the string from the respective statement using the pattern may involve directly outputting text of the pattern and matching pattern operators to components of the statement.

Moreover, when computing the string, not just the respective statement matching the condition but one or more further statements of the subset of the directed graph may be accessed by the pattern corresponding to the condition. In other words, the pattern can consider statements that do not match the condition. Accordingly, the condition may trigger pattern execution for the respective statement, which in turn may trigger processing of at least a portion of the subset of the directed graph (or the entire subset of the directed graph) using the pattern.

The subject, the object and the predicate may be referred to as components of their respective statement. The subject and/or the predicate may be an RDF resource (e.g., the subject and/or predicate may have the resource property of RDF, and may be a type or a label). The object may be a literal (e.g., an RDF literal) having a defined data type, such as string, integer, Boolean or double (as defined in the extensible markup language (XML) schema definition language (XSD)). Regarding RDF, please refer to the RDF specification, "Concepts and Abstract Syntax", https://www.w3.org/TR/rdf11-concepts/

The computed strings may be provided directly to the language model (e.g., in the case of small strings, such as less than 1 GB) or may be serialized to a text file before being provided to the language model (e.g., in the case of terabytes of data computed from a comprehensive directed graph). In summary, the method accepts a subset of a directed graph as input and generates grammatically correct sentences as the computed strings. The method iterates over the input statements (i.e. triples) in the subset of the directed graph and uses the conditions filters to determine which patterns may be applicable to each of the statements. When a condition matches a statement and the statement has the elements required by a pattern corresponding to (e.g., assigned to) the condition, the pattern is applied to the condition. The result of the iteration may be a set of strings, such that a string is computed for each statement in the input. The syntax and interpretation of patterns is discussed in more detail below.

The statements of the directed graph may be close to human language.

Hence, providing the computed strings of as input to the language model may maximize the usability of the subset of the directed graph, for example, by using the subset of the directed graph as a basis for artificial intelligence applications. Once the language model has processed the computed strings, the language model may be used to answer questions or carry out tasks based on knowledge stored in the subset of the directed graph. Accordingly, the time, labor and expense invested to construct the directed graph may be exploited in further ways (e.g., to answer questions or by using the language model.

In addition or alternatively, it may be desirable to extract human readable text from the subset of the directed graph, e.g., for use in explaining answers provided by software (e.g., a process advisor) relying on the subset of the directed graph.

In some cases, each of the conditions includes at least three condition variables (variables appearing in a condition may be referred to as condition variables). Each of the condition variables may correspond to (e.g., store) a different component of a statement. For example, a first one of the condition variables matches the subject, a second one of the condition variables matches the predicate and a third one of the condition variables matches the object. At least one of the condition variables may be bound to at least one value, e.g., to an RDF property. In other words, at least one of the condition variables may specify at least one value (e.g., RDF property) that a component of a statement must have. Each of the condition variables may specify an instance of a class (e.g., an RDF class) or a literal (e.g., an RDF literal). An instance of a class may be referred to as an instance. The instance may relate to a specific concept and have a definite article while the class may relate to a generic concept and have an indefinite article.

Each condition may be applied to a statement and may evaluate to TRUE or FALSE. In other words, a condition may return a Boolean value. For example, if the condition evaluates to TRUE, the condition matches the respective statement and it is determined whether the at least one pattern corresponding to the condition can be applied to the respective statement. The following are numbered examples of conditions that may be among the plurality of conditions:
1. <?s> <?p> <?o> .
2. <?s> <?p> <?o> .
   BIND(rdfs:label AS <?p>)
3. <?s> <?p> <?o> .
   <?s> rdf:type sap:BusinessActivity .
   BIND(rdfs:label AS <?p>)
4. <?s> <?p> <?o> .
   <?s> rdf:type sap:BusinessActivity .
   <?o> sap:requires <?r> .
   BIND(rdfs:label AS <?p>)

In the first condition, "<?s>" is a variable corresponding to a subject in the directed graph, "<?p>" is a variable corresponding to a predicate in the directed graph and "<?o>" is a variable corresponding to an object in the directed graph. Hence, the first condition specifies that (i.e., in order for the first condition to evaluate to TRUE) a statement must contain a subject, a predicate and an object. The second condition requires that a statement contains a subject, a predicate and an object and that the predicate is an rdfs:label. The third condition requires that a statement contains a subject, a predicate and an object, that the subject has the property (more specifically, is of type) sap:BusinessActivity and that the predicate is an rdfs:label. The fourth condition requires that a statement contains a subject, a predicate and an object, that the subject has the property (more specifically, is of type) sap:BusinessActivity, that the object has a relation (i.e., a subject-object relation) of "sap:requires" with the object "<?r>" and that the predicate is an rdfs:label. In this connection, "<?r>" is a variable bound to a requirement.

The conditions of the plurality of conditions may function to prevent patterns from being used to compute semantically incorrect strings. In other words, the conditions may be used to ensure that the computed strings are semantically and/or grammatically correct. Accordingly, by assigning patterns to conditions, the cases in which patterns are applied can be limited, thereby ensuring or facilitating computation of semantically correct strings, i.e., sentences. Without conditions, patterns could be applied to compute exemplary fantasy strings such as, "The Harry Potter Book is a business activity.", or "The Star Wars Movie is a business activity." However, the exemplary fantasy strings are semantically incorrect; therefore, the exemplary fantasy strings would not be helpful as input to the language model and could prolong the training of the language model or even cause the language model to produce incorrect output.

In some cases, at least one of the conditions has a plurality of corresponding patterns. Accordingly, computing a string from the respective statement using the pattern may comprise computing a plurality of strings from the respective statement using each pattern corresponding to the condition (i.e., the condition matching the respective statement) that can be applied to the respective statement.

Alternatively, computing a string from the respective statement using the pattern may comprise determining a random order of the patterns corresponding to the condition and computing a string from the respective statement only using a first one in the random order of the patterns that can be applied to the respective statement. For example, patterns 1 to 4 may be ordered 2, 4, 3, 1 and pattern 2 can be applied to the respective statement, hence, pattern 2 is applied to the respective statement.

For example, the plurality of conditions may include a sequencelD condition:

```
       <?I1> <SequenceID> <?L1> .
```

The sequencelD condition may correspond to the following pattern (A):
(A) The sequence identifier of <?I1.rdf:type. rdfs:label> <?I1.rdfs:label> is <?L1>.

Continuing the example, the subset of the directed graph may include the following statements:
(1) Emissions Management isA BusinessCapability .
(2) BusinessCapability rdfs:label "Businesss Capability" .
(3) EmissionsManagement SequenceID "5".

The sequencelD condition only matches statement (3), since statement (3) includes a "SequencelD" and statements (1) and (2) do not include a "SequencelD".

Pattern (A) can be applied to statements (1), (2) and (3) to compute the following string:

The sequence identifier of Business Capability is 5.

All three statements are needed to compute the string above because statements (1) and (2) provide context information for statement (3).

Hence, as indicated above, when computing the string, not just the respective statement matching the condition but one or more further statements of the subset of the directed graph may be accessed by the pattern corresponding to the condition. In other words, the pattern can consider statements that do not match the condition. Accordingly, the condition triggers the pattern execution for the respective statement.

Moreover, the statements of the subset of the directed graph may be iteratively checked. Accordingly, in the example above statements (1) and (2) do not cause the pattern to be triggered but statement (3) does.

In the present example, determining whether pattern (A) can be applied to statement (3) may include determining context information items of pattern (A), namely:
- the label of the type of variable <?I1|
- the label of variable <?I1>

Both context information items are not available in statement (3) itself, but instead elsewhere in the subset of the directed graph.

The contextual information exists in the subset of the directed graph in view of statement (3) and pattern (A) can be executed for statement (3).

Whenever the forward dot notation is used, we include additional information that is not existing in the triple itself

In some cases, each pattern includes one or more of the following:
- at least one variable, wherein the variable specifies (e.g., is bound to) a class, an instance of a class, a literal or a predicate;
- text, such as one or more articles (e.g., grammatical articles that are definite or indefinite);
- at least one property that applies to the variable.

Each pattern may further include a language filter. The literal may specify a numeric value or text, where the literal may conform to the RDF schema class of literal values.

Advantageously, the patterns may enable the combination of static text with variables specifying structures (e.g., the subject, the object and the predicate of one of the statements) of the subset of the directed graph, possibly supplemented with information resulting from materializing the subset of the directed graph.

In addition or alternatively, the patterns may include at least one specific pattern (i.e. custom pattern) and a plurality of default patterns. When a condition corresponding to the specific pattern matches a respective statement and the specific pattern can be applied to the respective statement, computing a string from the respective statement using the pattern may comprise using the specific pattern. When the condition corresponding to the specific pattern does not match the respective statement, the method may further comprise determining whether a condition corresponding to one of the default patterns matches the respective statement. When the condition corresponding to one of the default patterns matches the respective statement, computing a string from the respective statement using the one of the default patterns. Defining the plurality of conditions and the plurality of patterns may further comprise defining at least three conditions and at least three patterns, where at least one of the three patterns is a specific pattern and at least one of the three conditions corresponds to the specific pattern.

The following is an exemplary pattern that may be included in the plurality of patterns:

```
       Text <?I1.rdf:type.rdfs:label> Text
```

The variable <?I1> may be bound to sap:PrintReceipt. Patterns, such as the exemplary pattern above, may use forward dot notation (also referred to as dot notation) to refer to a field, component or sub-property of a property. This may provide the patterns with an advantage over conventional SPARQL, which does not support forward dot notation, since forward dot notation enables more compact expressions.

Accordingly, the exemplary pattern above could be applied to (e.g., the subset of the directed graph may include) the following three statements:

```
       sap:PrintReceipt rdf:type sap:Task .
       sap:Task rdfs:label "Task"@en .
       sap:Task rdfs:label "Process Task"@en .
```

In some cases, after a pattern is applied to a respective statement, the pattern is not applied to further statements matching the pattern, i.e., the further statements in the subset of the directed graph matching the pattern may be skipped. The matching of just one statement and skipping of further statements may be an option that can be configured. For example, as discussed below, the post operator may cause a Cartesian product to be computed.

For example, after a pattern is applied to a respective statement including an rdfs:label for an object, further statements including an rdfs:label for the object may be skipped, i.e., the pattern is not applied to the further statements. Accordingly, computing strings from the statements above using the exemplary pattern would yield the following: "Text Task Text".

At least one of the patterns may include a filter condition and/or a post operator. The filter condition may specify a language. The post operator may cause a Cartesian product to be performed. As another example, the subset of the directed graph may include the following four statements:

```
       sap:PrintReceipt rdf:type sap:Task .
       sap:Task rdfs:label "Task"@en .
       sap:Task rdfs:label "Process Task"@en .
       sap:Task rdfs:label "Schritt"@de .
```

The following further exemplary pattern may be included in the plurality of patterns and may be applied to the four statements above:

```
       Text <?I1.rdf:type.rdfs:label(lang = `en')*> Text
```

The further exemplary pattern above includes a filter condition to specify a language and an asterisk post operator "*" that yields a cartesian product. The cartesian product may yield all possible combinations of the preceding elements. Accordingly, the following strings would be computed by applying the further exemplary pattern including the cartesian product, since the further exemplary pattern is directed to English labels and there are two English labels among the four statements above:

```
       Text Task Text
       Text Process Task Text
```

Hence, the statement above including ""Schritt"@de" would not be processed since the statement does not meet the filter condition in the further exemplary pattern (i.e., the statement is not in the English language). Without the asterisk post operator in the further exemplary pattern above, only the first string "Text Task Text" would be computed.

The exemplary pattern and further exemplary pattern above may be specific patterns, i.e., patterns applicable to one directed graph or a group of directed graphs.

The strings may be computed from the respective statements using only default patterns. However, use of the specific patterns may result in computed strings that more accurately and precisely describe the contents of the subset of directed graph.

Other post operators (i.e., operators provided at the end of a pattern, also referred to as postfix operators) in addition to the asterisk may also be used. For example, an additional post operator might limit the output of a cartesian product to a specified number of combinations, e.g., about 10 combinations.

As another example, the following requirement pattern may be applied to the four statements above:

```
       The <?I1.rdf:type.rdfs:label(lang = `en')*> <?I1.rdfs:label>
       requires a <?I2.rdfs:label> .
```

In this example, <?I1> may be bound to sap:PrintReceipt and <?I2> may be bound to sap:Printer. Hence, by applying the requirement pattern to the four statements above, the following strings may be computed:
- The Process Task Print Receipt requires a Printer.
- Task Print Receipt requires a Printer.

Without the asterisk post operator in the requirement pattern, only the first string, i.e., "The Process Task Print Receipt requires a Printer." would be computed.

In some cases, each of the computed strings is a grammatically correct sentence, wherein the conditions and/or patterns may ensure that the computed strings are grammatically correct sentences.

In addition or alternatively, the at least one specific pattern may include a plurality of specific patterns. Each of the specific patterns may be applicable to a group of directed graphs defined according to the resource description framework or a group of knowledge graphs defined according to the resource description framework. Each of the default patterns may be applicable to any directed graph defined according to the resource description framework or any knowledge graph defined according to the resource description framework.

Accordingly, each specific pattern may be defined for a single on premises network and a corresponding directed graph, or a group of on premises networks and a corresponding group of directed graphs, whereas default patterns may be applicable to any directed graph.

The patterns may include one or more of the following five patterns:
- a pattern applicable to instance-to-instance statements, including variables <I1, p, I2>
- a pattern applicable to instance-to-class statements, including variables <11, p, C1>
- a pattern applicable to class-to-class statements, including variables <C1, p, C2>
- a pattern applicable to instance-to-literal statements, including variables <11, p, L1>
- a pattern applicable to class-to-literal statements, including variables <C1, p, L1>

The five patterns above may be made applicable to instance-to-instance statements, instance-to-class statements, class-to-class statements, instance-to-literal statements and class-to-literal statements via corresponding conditions including the respective variables <I1, p, I2>, <I1, p, C1>, <C1, p, C2>, <I1, p, L1>, <C1, p, L1>.

The five patterns mentioned above may be default patterns, in the sense that they are applicable to any directed graph, or more specifically, any knowledge graph.

For the five patterns mentioned above, "I1" and "I2" are variables referring to instances (i.e., instances of classes), "C1" and "C2" are variables referring to classes, "L1" is a variable referring to a literal, and "p" is a variable referring to a predicate. A first one of the five patterns applicable to instance-to-instance statements may be implemented as follows:

```
       The <?I1.rdf:type.rdfs:label> <?I1.rdfs:label> <?p.rdfs:label> the
       <?I2.rdf:type.rdfs:label> <?I2.rdfs:label> .
```

A second one of the five patterns applicable to instance-to-class statements may be implemented as follows:

```
       The <?I1.rdf:type.rdfs:label> <?I1.rdfs:label> <?p.rdfs:label>
       a <?C1.rdfs:label> .
```

A third one of the five patterns applicable to class-to-class statements may be implemented as follows:

```
       A <?C1.rdfs:label> <?p.rdfs:label> a <?C2.rdfs:label> .
```

A fourth one of the five patterns applicable to instance-to-literal statements may be implemented as follows:

```
       The <?I1.rdfs:label> <?p.rdfs:label> <?L1>.
```

A fifth one of the five patterns applicable to class-to-literal statements may be implemented as follows:

```
       A <?C1.rdfs:label> <?p> <?L1>.
```

A user or administrator may define further default patterns or change the exemplary default patterns provided above.

In addition or alternatively, the plurality of patterns may include at least one text pattern and at least one question pattern. The text pattern and/or the question pattern may be a specific pattern. The text pattern and/or the question pattern may be a default pattern. Each condition may correspond to at least one text pattern and at least one condition may correspond to at least one question pattern. For example, the conditions may be defined such that each condition must correspond to at least one text pattern and each condition may correspond to at least one question pattern. A configuration option may be set to apply question patterns in addition to or instead of text patterns. When one of the conditions matches a respective statement and the configuration option is set to apply question patterns and the question pattern corresponding to the condition can be applied to the respective statement, the method may comprise computing the string from the respective statement using the question pattern and/or computing a further string from the respective statement using the question pattern in addition to a string computed from the respective statement using the text pattern.

For example, the subset of the directed graph may include the following seven statements:

```
       sap:PrintReceipt sap:requires sap:Printer .
       sap:PrintReceipt rdf:type sap:Task .
       sap:PrintReceipt rdfs:label "Print Receipt" .
       sap:Printer rdfs:label "Printer" .
       sap:Task rdfs:label "Task"@en .
       sap:Task rdfs:label "Process Task"@en .
       sap:Task rdfs:label "Schritt"@de .
```

Continuing the example, the plurality of patterns may include the following pattern (e.g., text pattern):

```
       The <I1.rdf:type.label(lang = 'en')*> <I1.rdfs:label> requires a
       <I2.rdfs:label>.
```

In addition, the plurality of patterns may include the following question pattern preceding the text pattern directly above:

```
       What is required by <I1.rdf:type.label (lang = 'en')*>
       <I1.rdfs:label>?
```

The "*" (asterisk) operator (i.e., post operator) in the question pattern causes a Cartesian product to be computed. In the text and question patterns above, <?I1> is bound to (i.e., holds the value) sap:PrintReceipt, <?p> is bound to sap:requires, and <?I2> is bound to sap:Printer. Accordingly, a configuration option may be set to apply both question patterns and text patterns. Hence, by applying both the question pattern and the text pattern to the seven statements above, the following question/answer strings are computed:
Q: What is required by Task Print Receipt?
A: The Task Print Receipt requires a Printer.
Q: What is required by Task Print Receipt?
A: The Process Task Print Receipt requires a Printer.
Q: What is required by Process Task Print Receipt?
A: The Task Print Receipt requires a Printer.
Q: What is required by Process Task Print Receipt?
A: The Process Task Print Receipt requires a Printer.

The strings above are preceded by "Q: " and "A: " in the interest of clarity. Accordingly, the question patterns may be used to simulate a question-answer interaction. As discussed in the example above regarding to the cartesian product, without the asterisk operator of the present example, strings would only be computed from the first statement to which the question and text patterns can be applied, i.e., the first statement matching the question and text patterns.

In some cases, the subset of the directed graph may be the entire directed graph. Alternatively, the subset of the directed graph may be a proper subset of the entire directed graph and may be determined by means of a query of the directed graph. The query may be a SPARQL Protocol and RDF Query Language (SPARQL) query.

In some cases, the subset of the directed graph includes a plurality of nodes connected by edges. The nodes may represent real-world entities and the edges may represent relations between entities or relations between entities and types (i.e. classes) of the entities. Hence, predicates can be distinguished depending on whether they connect two entities or an entity and an entity type. The entities may also be referred to as resources. For each statement, the subject may correspond to a node, the object may correspond to a (different) node and an edge corresponding to the predicate may connect the subject node to the object node.

The nodes may have corresponding classes, such that each of the nodes has a corresponding class. The (corresponding) classes may be part of (or organized in) a schema (i.e., a data schema or an ontology). The schema may be defined in the RDF or the Web ontology language.

The following are examples of classes:

```
              :State a rdfs:Class .
              :EuropeanState a rdfs:Class .
              :City a rdfs:Class .
```

Hence ":State" is a resource that is a class, more specifically, an RDF class. The class ":EuropeanState" is another resource that is a class, more specifically, a subclass of ":State". Hence, hierarchies of classes are possible. Moreover, multiple inheritance is also possible.

In addition or alternatively, the directed graph may be labeled and multi-relational. Accordingly, both the nodes and edges may have labels and the edges may have directions. The objects of the statements may be labels of the directed graph. The directed graph may be multi-relational in the sense that the edges have different labels. The nodes of the directed graph may be subjects or objects and the edges may be predicates.

In addition or alternatively, the schema may include properties. Each of the properties may apply to at least one of the classes of the schema. At least one of the properties may have a domain and/or a range. Each of the properties may be used by (or apply to) at least one statement. The domain (e.g., rdfs:domain) may specify a class to which a subject belongs and the range (e.g., rdfs:range) may specify a class to which an object belongs. More specifically, the domain may specify a class to which the subject of the statement belongs and the range may specify a class to which an object of the statement belongs. With regard to the RDF Schema, please refer to the W3C RDF Schema specification, https://www.w3.org/TR/rdf-schema/.

The following are examples of properties:

```
       rdf:type a rdf:Property
       dbo:foundationPlace a rdf:Property .
       :EuropeanState rdfs:subClassOf :State .
       :locatedIn a rdf:Property .
       :capitalOf a rdf:Property .
       :capitalOf rdfs:subPropertyOf :locatedIn .
```

Hence, ":locatedln" and ":capitalOf" are properties. Moreover, ":capitalOf" is a subproperty of ":locatedln". Hence, properties can also form hierarchies. The property ":EuropeanState rdfs:subClassOf :State" indicates that ":EuropeanState" is a subclass in a class hierarchy including the class ":State" and the subclass ":EuropeanState".

Hence, the schema may provide a vocabulary for the directed graph (e.g., knowledge graph). The directed graph may have predefined property prefixes, which can indicate whether a node (i.e., a subject or object) is an instance of a class or a class (e.g., a node may be a class if the node has a prefix "dbo," which represents DBpedia ontology, and a node may be an instance if the node has a prefix "dbr," which represents DBpedia resource). In certain cases, the directed graph can use URI design to differentiate between instances and classes. The directed graph may include statements which explicitly indicate certain nodes are classes. In certain cases, whether a specific node represents an instance or a class can depend on the underlying model. For example, whether a node is a class (and included in the schema of the directed graph) or an instance (thus is not included in the schema of the directed graph) can be determined by checking the rdf:type property: If the type is owl:Class, then the node is a class and is included in the schema; otherwise the node is instance (i.e., instance of a class) and is not included in the schema.

In some cases, the total number of patterns is greater than or equal to the total number of properties.

Moreover, for an ontology (i.e., schema) O with a set of classes C and a set of properties *P,* merely |*P*| conditions are required to compute strings from a complete directed graph without syntax errors.

In addition or alternatively, the data from the directed graph covers a plurality of topical domains. Each statement may be identified by at least one uniform resource identifier (URI). At least one of the nodes and edges may be identified by a URI or an internationalized resource identifier (IRI). More specifically, the nodes and edges may each be identified by a URI or an IRI. In some cases, one or more of the subject, the object and the predicate may be a URI. Some nodes (e.g., nodes corresponding to objects) may be identified via a literal rather than a URI. The directed graph may be represented using the RDF. The directed graph may be a knowledge base and/or a knowledge graph. The statements may be referred to as facts or fact statements. Accordingly, the directed graph may have a structure that is similar to known knowledge graphs such as DBPedia, Wikidata, BabelNet, DBkWik, Freebase and DBnaray.

Compared to relational databases, the knowledge graph has a more flexible data structure because the types of data provided by the knowledge graph can vary. For example, properties associated with different instances can differ even though these instances share the same class (e.g., "SAP_SE" and "BASF_SE" can have different property data available although they share the same class "Company"). On the other hand, a relational database can be represented in a knowledge graph format, i.e., the knowledge graph can be a higher-level abstraction of the relational database.

In certain examples, the nodes in the directed graph (e.g., knowledge graph) can be organized in a hierarchical structure where a lower-level node (representing a more specific object) may be connected to a higher-level node (representing a more generic object) by one or more edges. The lower-level node (or the lower-level object it represents) can be called a descendant of the higher-level node (or the higher-level object it represents), and the higher-level node (or the higher-level object it represents) can be called an ancestor of the lower-level node (or the lower-level object it represents).

The method may further comprise receiving one or more rules corresponding to the subset of the directed graph. The rules may be reasoning, logic, inference or RDF schema rules. The method may further comprise materializing the subset of the directed graph by applying the rules to the plurality of statements to compute additional statements. Materializing the subset of the directed graph may be described as adding context data or references to context data to the subset of the directed graph.

Materializing the subset of the directed graph may be implemented by applying reasoning or applying the (reasoning) rules to the subset of the directed graph.

Numbered examples of rules are the following:
1. every object of the predicate "dbo:foundationPlace" is a country
2. every subject of the predicate ":capitalOf" is a city
3. every object of the predicate ":capitalOf" is a country

The first rule may be implemented by setting the range of the "dbo:foundationPlace" predicate so that its objects must be instances of a country class. The second rule may be implemented by setting the domain of the ":capitalOf" predicate so that its subjects must be instances of a city class. Similar to the first rule, the third rule may be implemented by setting the range of the ":capitalOf" predicate so that its objects must be instances of a country class.

An example of materializing (i.e., reasoning) follows. The materializing is based on the following statement:

```
       :Madrid :capitalOf :Spain .
```

and the following properties:

```
       :capitalOf rdfs:domain :City .
       :capitalOf rdfs:range :Country
       :capitalOf rdfs:subPropertyOf :locatedIn .
```

Accordingly, materializing may include combining a statement with one or more properties. More specifically, materializing may include combining a statement with properties (e.g., property restrictions) that limit the subject or object of the statement. The combinations may be used to determine further statements, e.g., classes that the subject of the statement is an instance of and/or classes that the object of the statement is an instance of. Materializing may be understood as determining statements that can be implicitly derived from the directed graph and adding the determined statements to the directed graph. Three numbered examples of reasoning follow:
1. :Madrid :capitalOf :Spain .
   :capitalOf rdfs:domain :City .
   → :Madrid a :City .
2. :Madrid :capitalOf :Spain .
   :capitalOf rdfs:range :Country
   → :Spain a :Country .
3. :Madrid :capitalof :Spain .
   :capitalOf rdfs:subPropertyOf :locatedIn .
   → :Madrid :locatedIn :Spain .

Each of the three examples above combines the statement, ":Madrid :capitalOf :Spain" with a different property in order to compute (i.e., derive) an additional statement. In the first example, the statement ":Madrid :capitalOf :Spain" is combined with the property ":capitalOf rdfs:domain :City" to compute ":Madrid a :City", which indicates that the subject of the statement, ":Madrid", belongs to (i.e., is an instance of) the class ":City". In the second example, ":Madrid :capitalOf :Spain" is combined with the property ":capitalOf rdfs:range :Country" to compute ":Spain a :Country", which indicates that the object of the statement, ":Spain", is an instance of the class ":Country". In the third example, ":Madrid :capitalOf :Spain" is combined with the property ":capitalOf rdfs:subPropertyOf :Iocatedln" to compute ":Madrid :locatedIn :Spain", which indicates that the subject ":Madrid" has the property ":Iocatedln" with respect to the object ":Spain".

Each of the additional computed statements (i.e., the materialized statements) may be added to the subset of the directed graph before the subset of the directed graph is received and before the strings are computed.

Continuing the example, given the statement and the properties before materialization, the following SPARQL query would return FALSE:

```
       ASK { :Madrid a :City .}
```

After materialization, the same SPARQL query would return TRUE. Materializing the directed graph may increase the effectiveness of the computed strings in training the language model, in view of the additional reasoning provided and the logical connections created between statements. Moreover, the capability of the language model to reason may increase with the level of detail of the input provided to the language model. Accordingly, since materializing the directed graph increases the level of detail in the directed graph, strings computed from the materialized directed graph may be more effective in training the language model than strings computed from a directed graph that has not been materialized.

The directed graph may be materialized as statements are inserted into the directed graph, e.g., before defining the plurality of conditions and the plurality of patterns. Hence, the steps of receiving the one or more rules corresponding to the subset of the directed graph as well as the following materializing step may be carried out before defining the plurality of conditions and the plurality of patterns. This may lead to faster computing of strings from the subset of the directed graph, since the materializing has already been carried out.

Alternatively, the steps of materializing the directed graph may be carried out upon the subset of the directed graph that is received. This may have the advantage of providing better performance in cases when materialization is not used or may increase the efficiency of creating the directed graph.

In addition or alternatively, the method may further comprise sorting the subset of the directed graph such that nodes are grouped together with their neighbors. The sorting may be carried out after materializing the subset of the directed graph. The sorting may comprise determining a list of nodes in the subset of the directed graph and adding a randomly selected node to a new list of nodes. For each node in the new list of nodes, determining the connected nodes. For each of the connected nodes, if the respective node is in the subset of the directed graph, adding the respective node to the list of nodes. The method may further comprise removing the node from the list of nodes.

Pseudocode for the sorting algorithm described in the preceding paragraph is provided below:

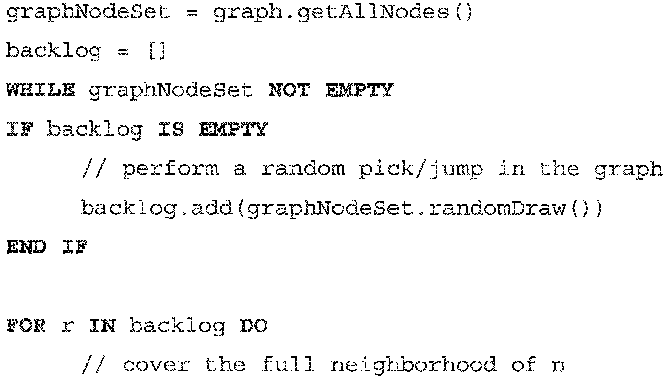

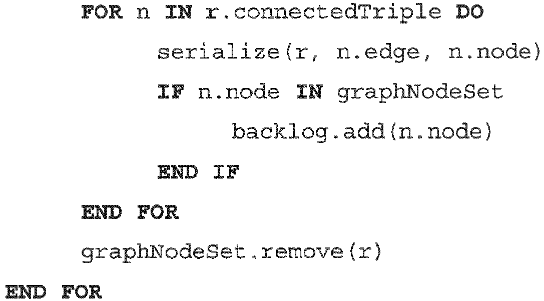

The serialize() function above may verbalize a respective triple ("r" - subject, "n.edge" - object, "n.node" - predicate). In other words, the serialize() function may translate a statement from the subset of the directed graph into a serialization format, such as RDF/XML, RDFa, Notations (.n3), or Turtle (.ttl), N-Triples, or JSON-LD.

The sorting algorithm may be referred to as a clustering algorithm and may ensure topicality, i.e., that the computed strings are close to each other in the sense that they relate to similar topics or the same topic. In other words, neighboring computed strings are semantically similar. This may increase the effectiveness of the strings in training the language model.

The method may further comprise training the language model using the computed strings.

For example, providing the computed strings as input to the language model may include using the computed strings to train (e.g., further train) the language model. For example, the language model may be pretrained or extensively trained, but the training might not include data in the subset of the knowledge graph. Therefore, training the language model using the computed strings may expand the capability of the language model and enable to language model to assist in tasks related to data in the subset of the knowledge graph.

Training the language model using the subset of the directed graph may have the advantage of leveraging or expanding on the substantial effort and expense that went into the language model. For example, training a large language model, such as ChatGPT, PaLM, Megatron, Titan or Chinchilla, may take months and cost tens of millions of dollars or euros. Enabling the large language model to apply information from the subset of the directed graph may be a way to take further advantage of the effort and expense already invested in training the large language model.

Moreover, training the language model using the subset of the directed graph may involve fine tuning the language model (e.g., by applying low-rank adaptation) to optimize the language model for a task or a domain, e.g., the domain of the subset of the knowledge graph.

For further information on Low-Rank Adaptation, please refer to "LoRA: Low-Rank Adaptation of Large Language Models", Edward Hu et al., 17 Jun 2021.

In some cases, the language model is a probability distribution over sequences of words. The language model may be a large language model, e.g., having at least one million parameters or at least one billion parameters.

In some cases, the language model includes a neural network. The neural network may be a deep neural network, e.g., a neural network having one or more hidden layers. The neural network may have at least one million parameters (e.g., weights and biases) or at least one billion parameters. The neural network may have been trained on unlabeled (i.e., unannotated) text using unsupervised (i.e., self-supervised) learning.

In addition or alternatively, the neural network may include a transformer that uses self-attention, thereby differentially waiting the significance of each part of input data provided to the neural network. Input to the neural network may be parsed into tokens and the tokens may be processed simultaneously by calculating weights for the tokens in successive layers of the neural network. The neural network may be designed to process sequential input data. The neural network may include weights (e.g., soft weights) that can be changed during runtime.

According to another aspect, a computer program (e.g., a computer program product) is provided. The computer program comprises instructions that, when the program is executed by a computer, cause the computer to carry out the method of any one of the preceding claims.

According to yet another aspect, a computer readable medium stores the computer program. For example, the computer program may be tangibly embodied in the computer readable medium. In other words, the computer readable medium may be a non-transitory storage medium.

According to a further aspect, a computer system for providing data from a directed graph to a language model is provided. The system comprises a database storing a directed graph. The system further comprises a software service configured to define a plurality of conditions and a plurality of patterns. Each of the conditions has at least one corresponding pattern. The software service is further configured to receive a subset of the directed graph from the database. The subset of the directed graph includes a plurality of statements. Each of the statements includes a subject, an object and a predicate relating the subject to the object. For each of the statements in the subset of the directed graph, the software service is configured to perform the following: when one of the conditions matches a respective statement and the pattern corresponding to the condition can be applied to the respective statement, compute a string from the respective statement using the pattern. The software service is further configured to provide the computed strings as input to the language model.

The software service may be a web service. The web service may run on a server and listen for network requests on a port, e.g., port 80.

The subject matter described in this disclosure can be implemented as a method or on a device, possibly in the form of one or more computer programs (e.g., computer program products). Such computer programs may cause a data processing apparatus to perform one or more operations described in the present disclosure.

The subject matter described in the present disclosure can be implemented in a data signal or on a machine readable medium, where the medium is embodied in one or more information carriers, such as a CD-ROM, a DVD-ROM, a semiconductor memory, or a hard disk. In particular, disclosed subject matter may be tangibly embodied in a non-transitory machine (computer) readable medium.

In addition, the subject matter described in the present disclosure can be implemented as a system including a processor, and a memory coupled to the processor. The memory may encode one or more programs to cause the processor to perform one or more of the methods described in the application. Further subject matter described in the present disclosure can be implemented using various machines.

Details of one or more implementations are set forth in the exemplary drawings and description that follow. Other features will be apparent from the description, the drawings, and from the claims.

### Brief Description of the Drawings

Figure 1 shows an exemplary directed graph.
Figure 2 shows the domain and range of a property in a schema of a directed graph.
Figure 3 shows an exemplary SPARQL query and results of the query.
Figure 4 shows a block diagram notation for subsequent figures.
Figure 5 shows Crow's Foot notation for annotation in subsequent figures.
Figure 6 shows an exemplary system architecture for a method according to some embodiments.
Figure 7 shows an algorithm for computing strings from a directed graph for input to a language model.
Figure 8 shows a sorting algorithm for sorting statements of a directed graph.
Figure 9 shows a directed graph that may be provided as input to the sorting algorithm.
Figure 10 shows a relationship between a condition and one or more patterns.
Figure 11 shows a relationship between a condition and one or more patterns, where the patterns may include question patterns.
Figure 12 shows the algorithm of figure 7 expanded to handle question patterns.
Figure 13 shows an implementation of the method for providing data from a directed graph to a language model implemented as a remote service.
Figure 14 shows a hybrid implementation of the method for providing data from a directed graph to a language model.
Figure 15 shows an on-premises implementation of the method for providing data from a directed graph to a language model.

### Detailed Description

In the following text, a detailed description of examples will be given with reference to the drawings. Various modifications to the examples may be made. In particular, one or more elements of one example may be combined and used in other examples to form new examples.

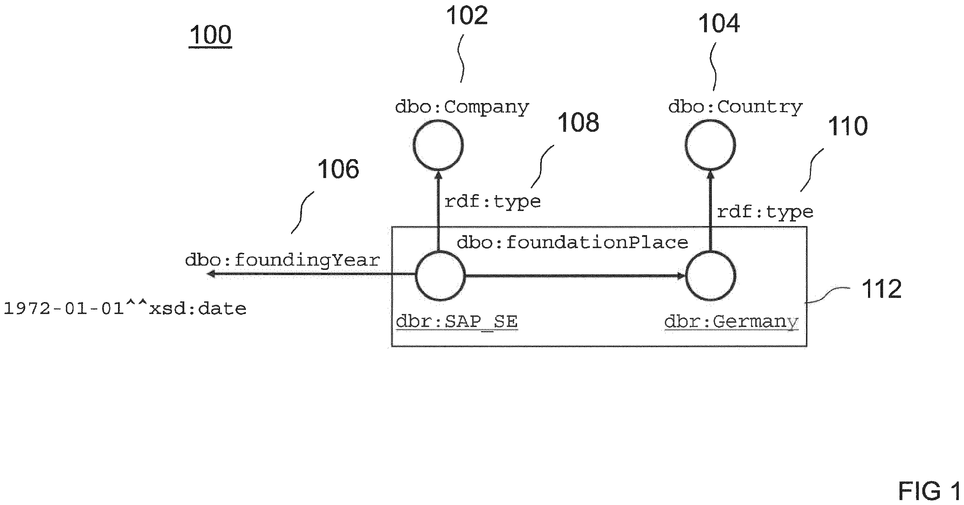

Figure 1 shows a subset 100 of a directed graph. More specifically, figure 1 shows a subset 100 of a knowledge graph. Nodes of the directed graph are shown as circles and edges of the directed graph are shown as arrows. The subset 100 of the directed graph includes labels 102, 104, 106, 108, 110, where the labels are URIs and defined in the resource description framework (RDF). The node labels 102 and 104 are objects, the edge labels 106, 108, 110 are predicates. The string "1972-01-01" may also be a node label (i.e., an object) having a type of xsd:date.

The subset 100 of the directed graph includes a statement 112 (i.e., triple statement) having a subject "dbr:SAP_SE", a predicate "dbo:foundationPlace" and an object "dbr:Germany", each of which are URIs defined in RDF. An exemplary serialization of the statement 112 is dbr:SAP_SE dbo:foundationPlace dbr: Germany . A schema of the directed graph may be defined via RDF schema (RDFS) or Web Ontology Language (OWL) from the World Wide Web Consortium (W3C).

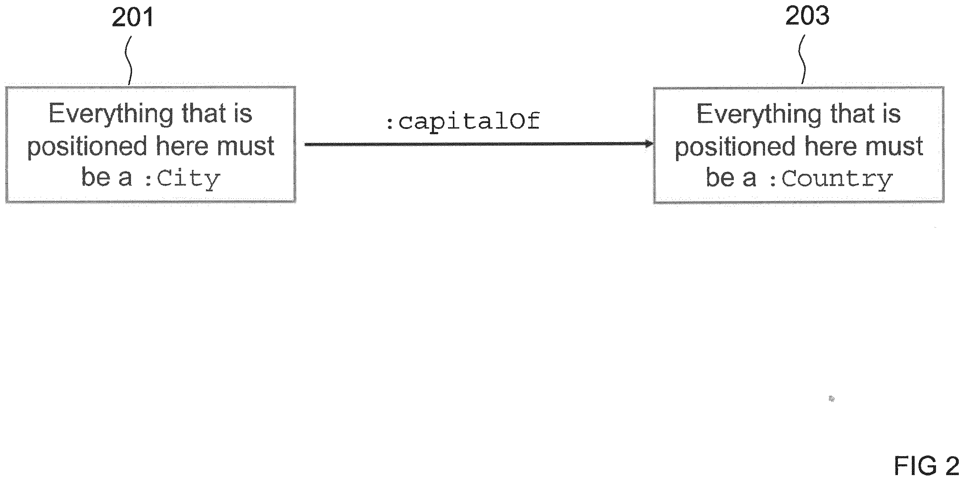

Figure 2 shows a domain 201 and a range 203 of a property, ":capitalOf". The domain 201 and the range 203 may be defined as follows:

```
       :capitalOf rdfs:domain :City .
       :capitalOf rdfs:range :Country .
```

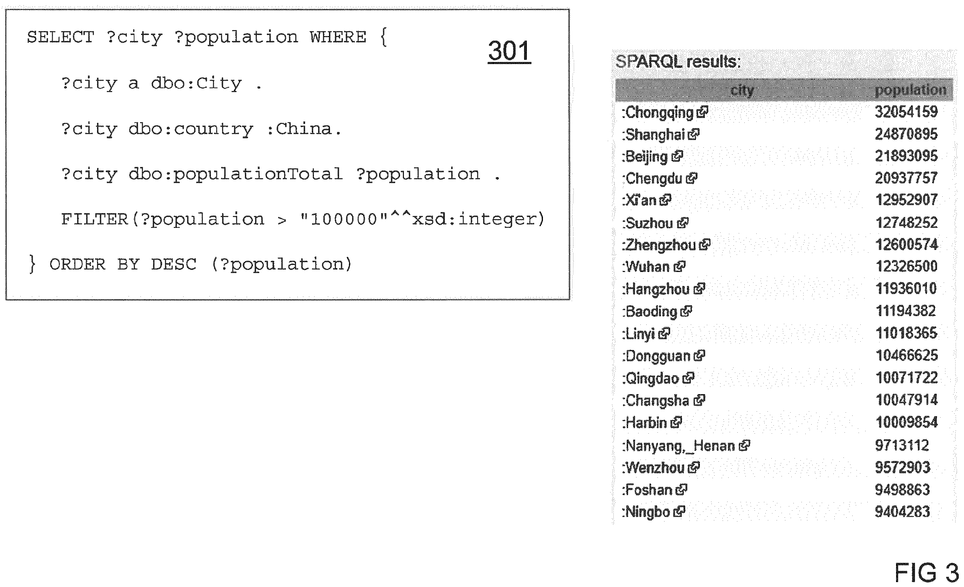

Figure 3 shows an exemplary SPARQL query 301 of a knowledge graph. The query 301 is configured to determine an answer to the following question: what is the population of cities in China which have more than 100,000 inhabitants? The results of executing the query 301 are also shown.

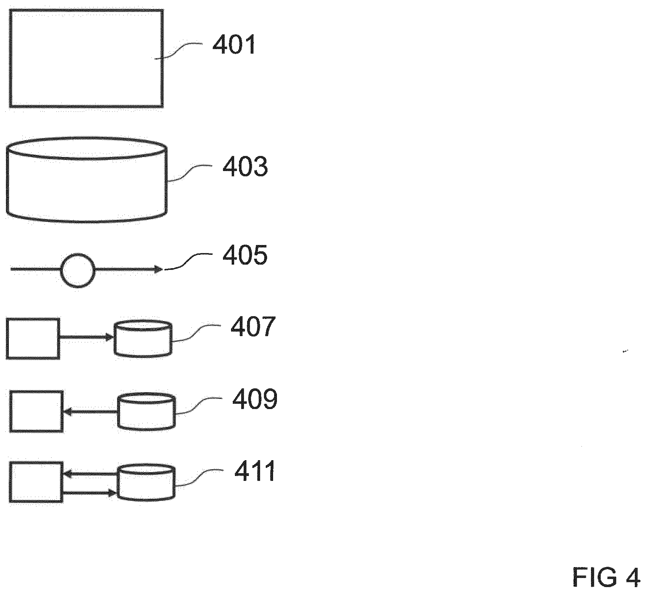

Figure 4 shows a block diagram notation used in subsequent figures. A system component 401 is shown as a rectangle. System components may also be shown as ovals. Storage 403 is shown as a cylinder with an oval profile. A request between system components 405 is shown as an arrow including a circle. A write between a system component and storage is shown at 407. A read between system component and storage is shown at 409. Read and write between system component and storage is shown at 411.

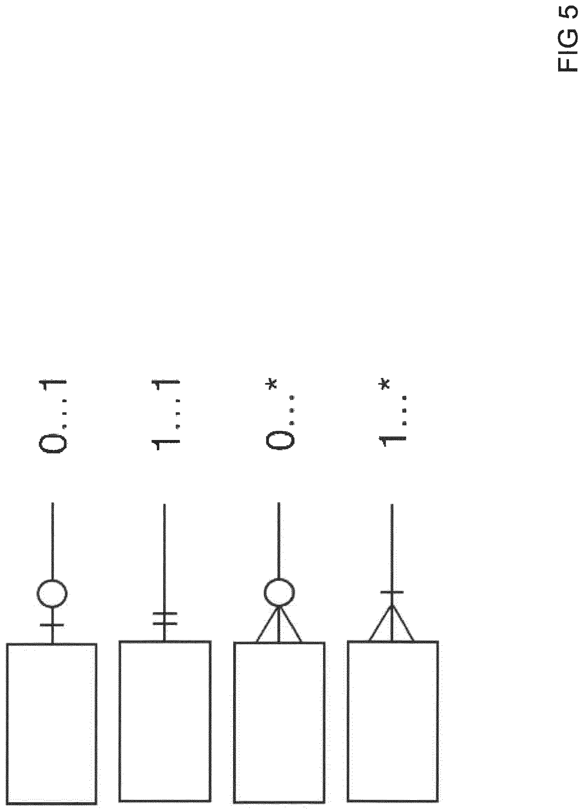

Figure 5 shows Crow's Foot Notation for annotating entities and cardinalities (e.g., minimum and maximum multiplicity).

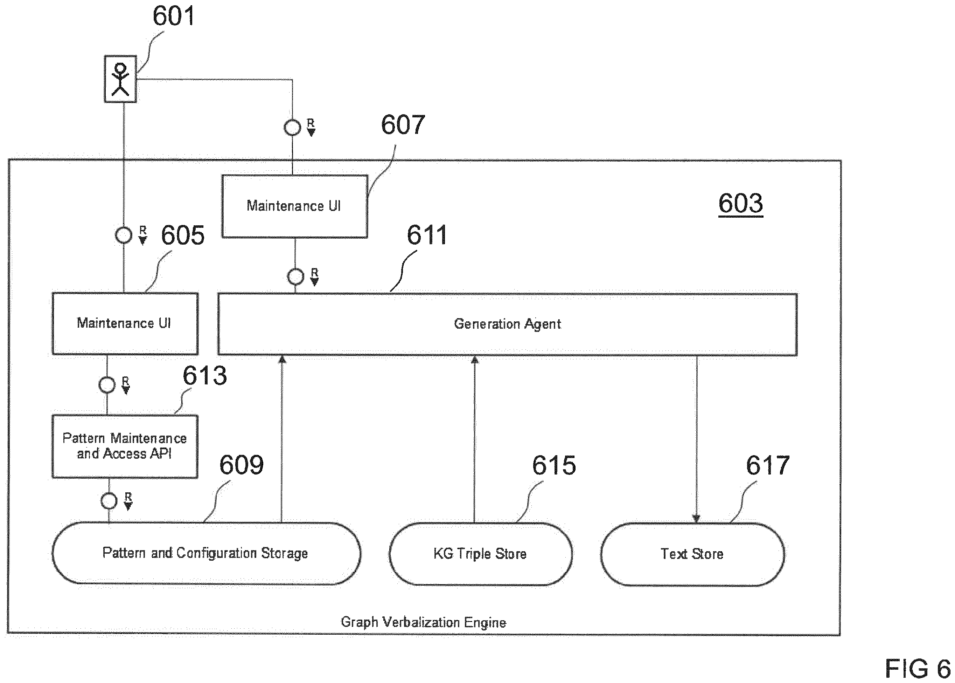

Figure 6 shows an architecture for a system for providing data from a directed graph to a language model. The language model may be trained using the data from the directed graph. Departing from the notation of figure 4, user interfaces and software components are shown as rectangles and storage components are shown with rounded corners.

The system may take the subset 100 of the directed graph (or a reference to the subset 100), custom conditions and custom patterns, and configuration options as input. The subset 100 may be provided as a set of triple statements. The pattern and configuration storage 609 may store default patterns, while custom conditions and patterns are provided by the client 601.

The configuration options may include indicating whether question patterns should be used in addition to text patterns or exclusively. The configuration options may specify how multiple patterns corresponding to conditions will be handled:
RUN_ALL: all patterns assigned to a condition are applied if the condition is TRUE;
RUN_RANDOM: patterns are ordered randomly and a first pattern that can be applied to the statement is used.

Another configuration option may specify whether the directed graph should be materialized (default TRUE). Other ways of handling multiple patterns and other configuration options may also be used.

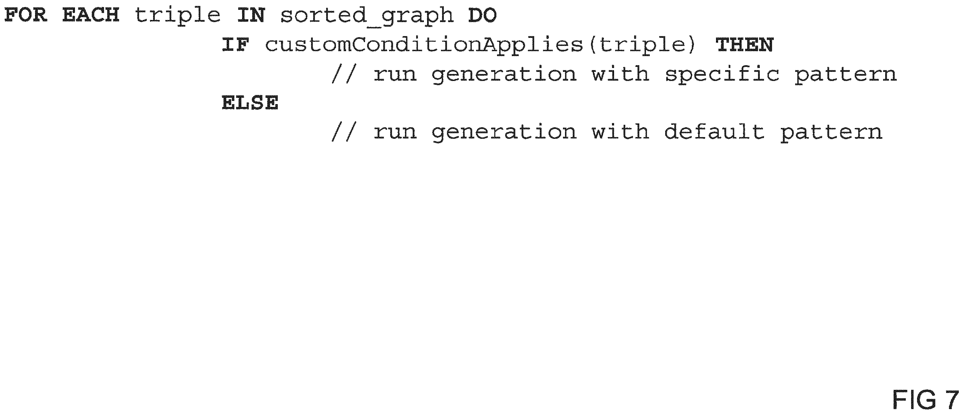

The directed graph may be materialized and the statements of the directed graph may be sorted, e.g., by the generation agent 611. Subsequently, strings may be computed from the statements of the subset 100 of the directed graph, as discussed in connection with figure 7.

A client 601 may be used to interact with a software service 603. The client 601 may interact with the software service 603 via different user interfaces (Uls) 605 and 607 in order to maintain patterns and/or configurations in a pattern and configuration storage 609, or to compute strings from the subset 100 of the directed graph via a generation agent 611. The pattern and configuration storage may be accessible via a pattern maintenance and access application programming interface (API) 613. The subset 100 may be the entire directed graph or a proper subset of the directed graph identified via a query, e.g., a SPARQL query. The SPARQL query may be constructed via a user interface that abstracts the query language, e.g., a low-code or no-code platform.

The directed graph may be stored in storage 615 and strings computed from statements of the subset 100 of the directed graph may be stored in storage 617.

Figure 7 shows an algorithm for computing strings from statements (i.e. triples) in the subset 100 of the directed graph. In the depicted example, the directed graph is sorted before the strings are computed. Before computing (i.e. generating) a string from a default pattern, it is first determined whether a condition corresponding to a specific (i.e., custom) pattern matches the statement. If the condition corresponding to the specific pattern matches the statement, the specific pattern is used to compute the string. Otherwise, the default pattern is used to compute the string.

When there are multiple specific and default patterns, then the specific patterns may be checked first and one of the default patterns may be used to compute the string only if none of the specific patterns can be applied.

After the strings are computed, the strings may be reformulated using a reformulation language model. The reformulation language model may differ from the language model to be trained. The reformulation language model may be a language model having a high or very high precision for f in the following reformulation function f:

```
       f(sentence) = sentence'
```

The reformulation language model (also referred to as a paraphrasing language model or an encoder-decoder model) may be implemented using Google T5, FLAN-T5 or Quillbot. The reformulation language model may have a high precision (e.g., at least 90% correctness) or a very high precision (e.g., at least 99% or at least 99.9% correctness). The reformulated strings may have a greater degree of language variation than the originally computed strings. The reformulated strings may be provided to a user and may hold the attention of the user better than the originally computed strings. Alternatively, the reformulated strings may be provided to the language model to be trained. The language variation in the reformulated strings may produce better results when training the language model than the originally computed strings.

The reformulated strings may occasionally be incorrect. Accordingly, a human may have the option to accept or reject the reformulated strings. Accepted and/or rejected reformulated strings may be used to retrain the reformulation language model. In addition, the accepted and/or rejected reformulated strings can be used to compare the quality of different reformulation functions f.

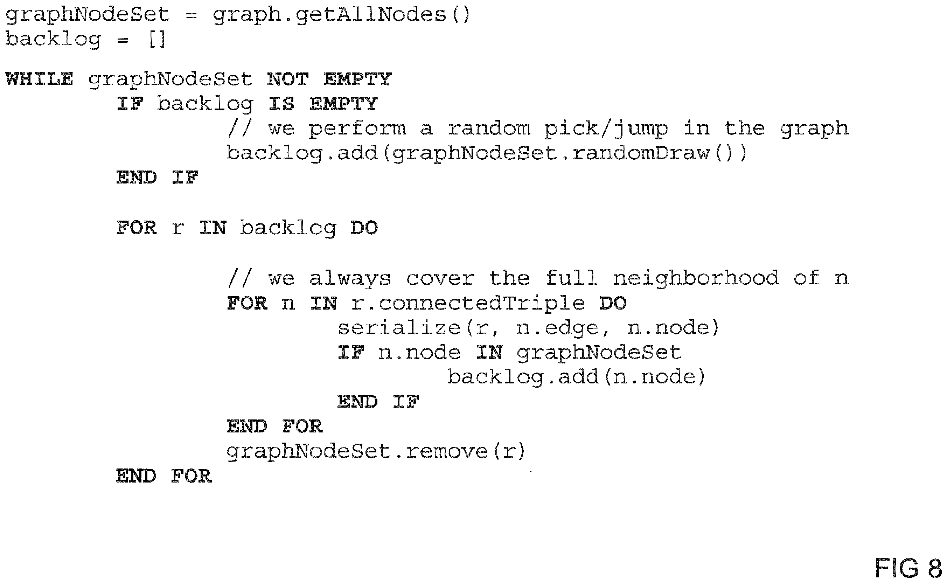

Figure 8 shows an exemplary sorting algorithm for sorting the statements of the directed graph. Sorting may prevent output of computed strings in random order. Once the statements are sorted, the same or similar topics may be grouped together. The sorting algorithm may have the following form:

```
       List<Triple> result = sort(Set<Triple>)
```

Set<Triple> corresponds to the statements of the directed graph before sorting and List<Triple> result corresponds to the statements of the directed graph after sorting, "sort" calls a sorting function, such as a function implementing the exemplary sorting algorithm depicted in figure 8. Other sorting functions may also be used.

The graphNodeSet variable initially holds the unsorted statements of the directed graph and the backlog variable will contain the sorted directed graph upon completion of the sorting algorithm.

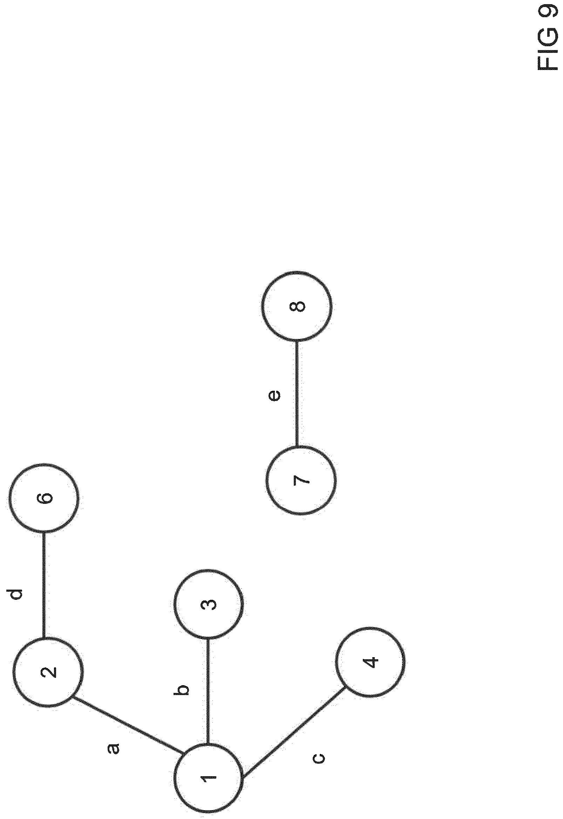

Figure 9 shows a directed graph that may be provided as input to the sorting algorithm of figure 8. Assuming that node one was drawn first, the output would be the following statements:
1 a 2
1 b 3
1 c 4
2 d 6
7 e 8

Each number above represents a node and each letter represents an edge, as shown in figure 9. Accordingly, the sorting algorithm ensures that rather than a random output, nodes that are close together in the directed graph are also grouped together in the computed strings provided as output. In other words, after being computed, neighboring strings cover semantically similar content.

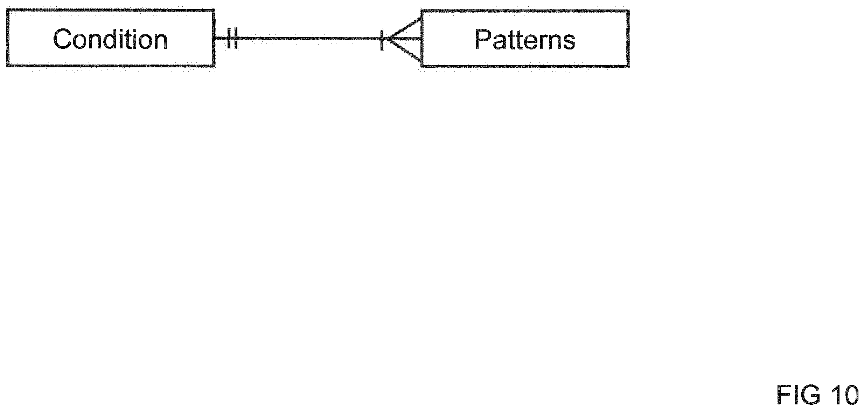

Figure 10 uses the Crow's Foot Notation of figure 5 to show that one condition has at least one but may have multiple corresponding patterns (also referred to as text patterns). When provided with a statement, e.g., an RDF triple, a condition may evaluate to TRUE or FALSE. If the condition evaluates to TRUE, i.e., the condition matches a respective statement, it is determined whether the at least one pattern corresponding to the condition can be applied to the respective statement. If the pattern can be applied, a string is computed from the respective statement using the pattern.

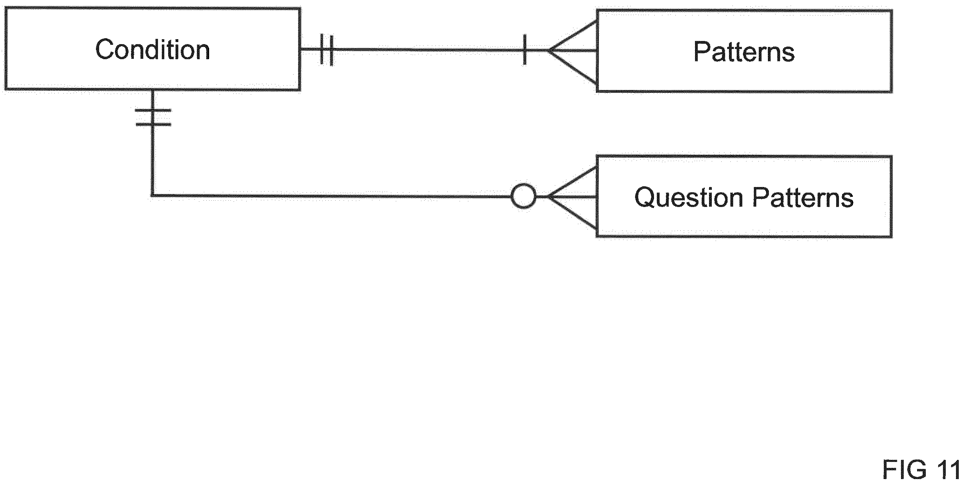

Figure 11 extends figure 10 to cover question patterns in addition to text patterns. Accordingly, the Crow's Foot Notation of figure 5 is used to show that one condition has at least one but may have multiple corresponding text patterns. In addition, the condition may have zero or more question patterns. The syntax of question patterns may be identical to the syntax of text patterns.

Question patterns may enable conversation-like strings to be computed. Such conversation like strings may be particularly useful for some language models, e.g., language models that require conversations.

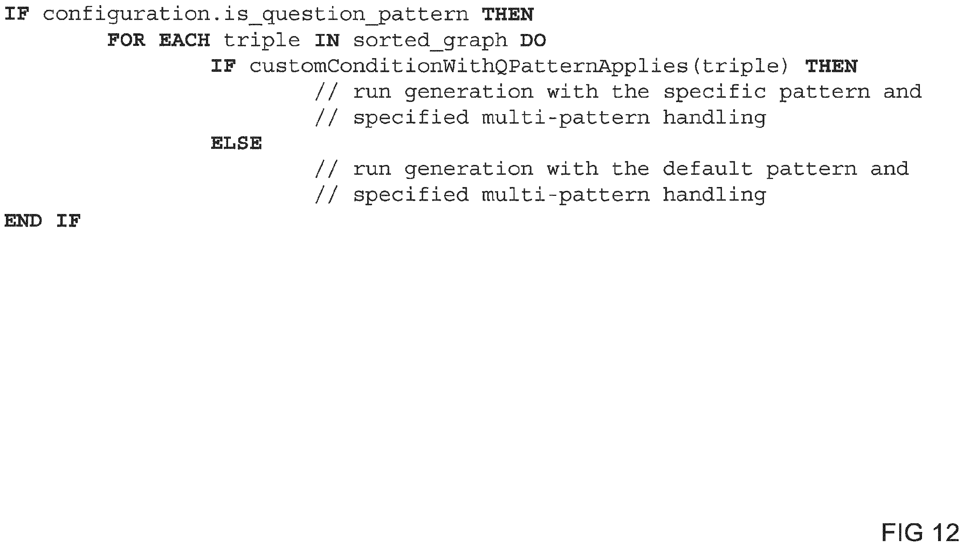

Figure 12 extends the algorithm of figure 7 to cover question patterns. In particular, if a configuration option enabling use of question patterns is set then specific conditions corresponding to question patterns are checked. If a question pattern corresponding to a specific condition can be applied, then a string is computed from a respective statement using the question pattern. Otherwise, a default pattern is used to compute a string from the respective statement.

The configuration options specifying how multiple patterns corresponding to conditions will be handled may be extended to question patterns as follows. Specifically, the following three configuration options may be used to handle multiple patterns assigned to at least one condition:
RUN_ALL: If a condition matches a statement and multiple question patterns are assigned to the condition, all question patterns that can be executed are executed. If there are multiple text patterns and question patterns, the Carthesian product of the text patterns and question patterns is executed.
RUN_RANDOM: If a condition matches a statement, a random order of all available question patterns assigned to the condition is determined. The question patterns are then tested for execution in a top-down fashion. The first question pattern that can be executed is executed and the process is stopped.
RUN_ALL_QPATTERNS_RANDOM_TEXT_PATTERN: All question patterns are used but if there are multiple text patterns, only a random text pattern is used to generate the answer.

Other ways of handling multiple patterns assigned to a condition may also be used.

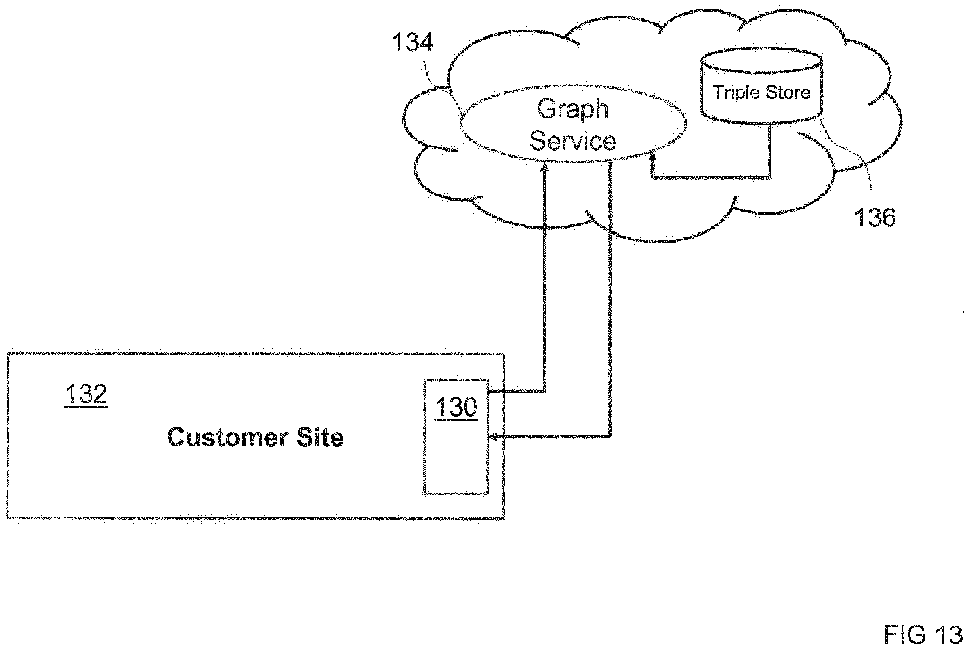

Figure 13 shows a remote service configuration and remote storage (i.e., a cloud implementation) of the method for providing data from a directed graph to a language model. A web client 130 connected to a local area network on the premises 132 of an organization may connect to a remote service, i.e., graph service 134, via the Internet. The local area network may use ethernet and/or Wi-Fi to provide network communications. The local area network may be contrasted with a wide area network. The graph service 134 may use storage 136 to carry out steps of the method for providing data from a directed graph to a language model. The web client 130 may initiate the method for providing data from the directed graph to a language model via a method call to the graph service 134. In response to the method call, the graph service 134 may connect to the storage 136 and receive the subset 100 of the directed graph.

The graph service 134 may then apply patterns to respective statements of the subset 100 of the directed graph based on whether conditions corresponding to the patterns match the respective statements and the patterns can be applied to the respective statements. If the patterns can be applied, strings are computed from the respective statements using the patterns. The graph service 134 may provide the computed strings to the web client 130 after all the statements in the subset 100 of the directed graph have been processed.

The graph service 134 and the storage 136 may be part of a cloud computing environment. Cloud computing is a model of service delivery for enabling convenient, on-demand network access to a shared pool of configurable computing resources (e.g., networks, network bandwidth, servers, processing, memory, storage, applications, virtual machines, and services) that can be rapidly provisioned and released with minimal management effort or interaction with a provider of the service.

A cloud computing environment (i.e., cloud environment or cloud) may have one or more of the following characteristics: scalability, multitenancy, performance monitoring, virtual resources that are dynamically assignable to different users according to demand, multiple redundant sites, multiple virtual machines, as well as network accessibility (e.g., via. the Internet) from multiple locations (e.g., via a web browser) and devices (e.g., mobile device or PC).

In comparison to an on-premises computing environment, the cloud computing environment may have a higher ratio of virtual resources to physical resources (e.g., a higher ratio of virtual machines to physical machines). For example, the ratio of virtual resources (e.g., machines) to physical resources may be at least 10:1, at least 20:1 or at least 30:1 in the cloud computing environment. In contrast, an on-premises computing environment may have less than four virtual resources (e.g., machines) per physical resource.

The cloud environment may be a public cloud or a private cloud. Public cloud (computing) infrastructure may involve sharing hardware, storage and/or network resources among multiple organizations or tenants. Services and may be accessed and managed using a web browser. Private cloud (computing) infrastructure may include resources exclusively used by one organization or group of users. In comparison to public cloud computing infrastructure, private cloud infrastructure may provide more flexibility and control, however, private cloud infrastructure may be more expensive. In both cases, public and private cloud computing infrastructure may be hosted by a service provider, e.g., Microsoft (Azure), Amazon (AWS) or SAP Business Technology Platform.

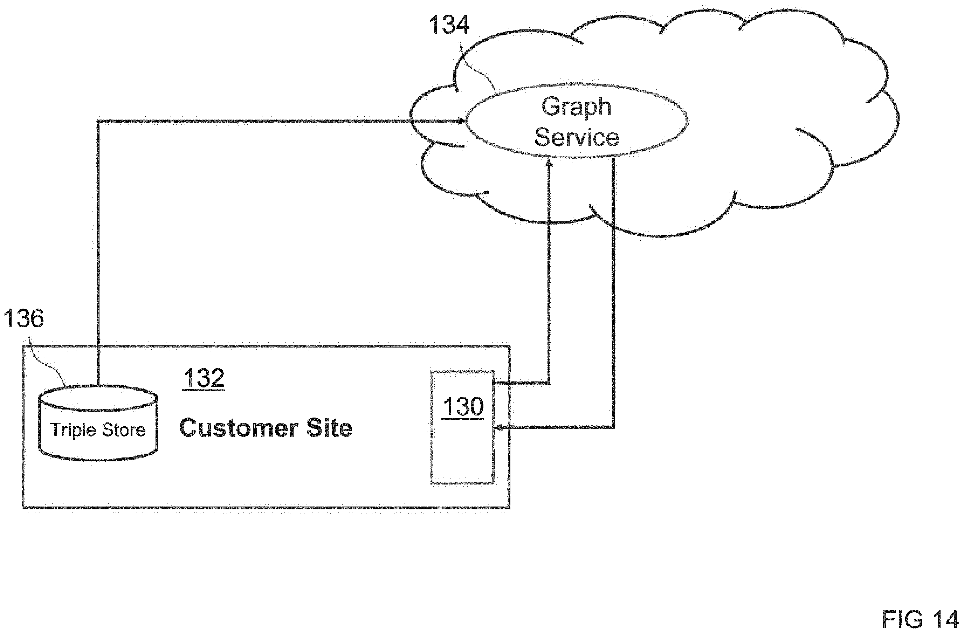

Figure 14 shows a hybrid implementation of the method for providing data from a directed graph to a language model. Accordingly, the web client 130 still accesses the graph service 134 over the Internet. However, the storage 136 is located on premises 132 of the organization. For example, the storage 136 may be connected to the web client 130 via the local area network. Alternatively, the web client 130 and the storage 136 may be connected to different local area networks. The graph service 134 may operate as described with regard to figure 13.

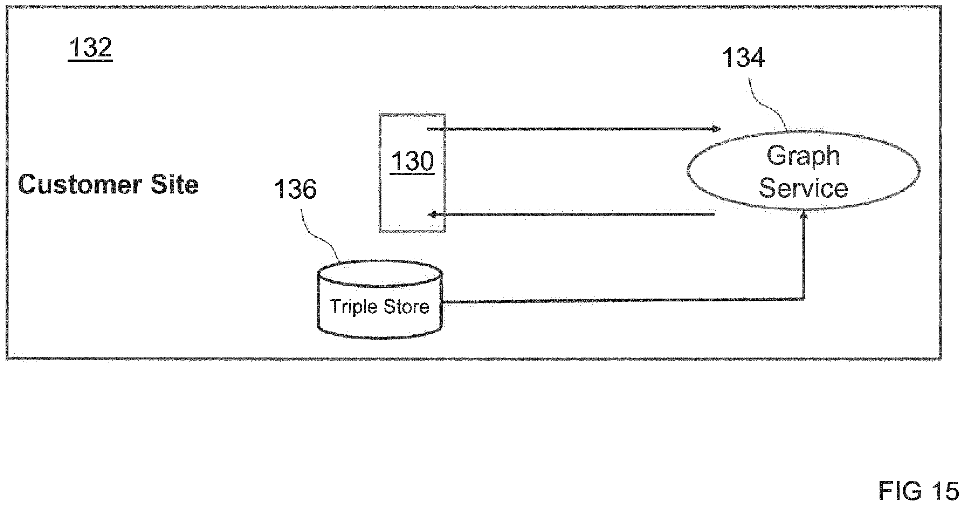

Figure 15 shows an on premises configuration in which the web client 130, the graph service 134, and the storage 136 are located on premises of the organization 132. In this case, the web client 132, the graph service 134 and the storage 136 may be connected to the same local area network. Other network configurations are also possible. The graph service 134 may operate as described with regard to figure 13.

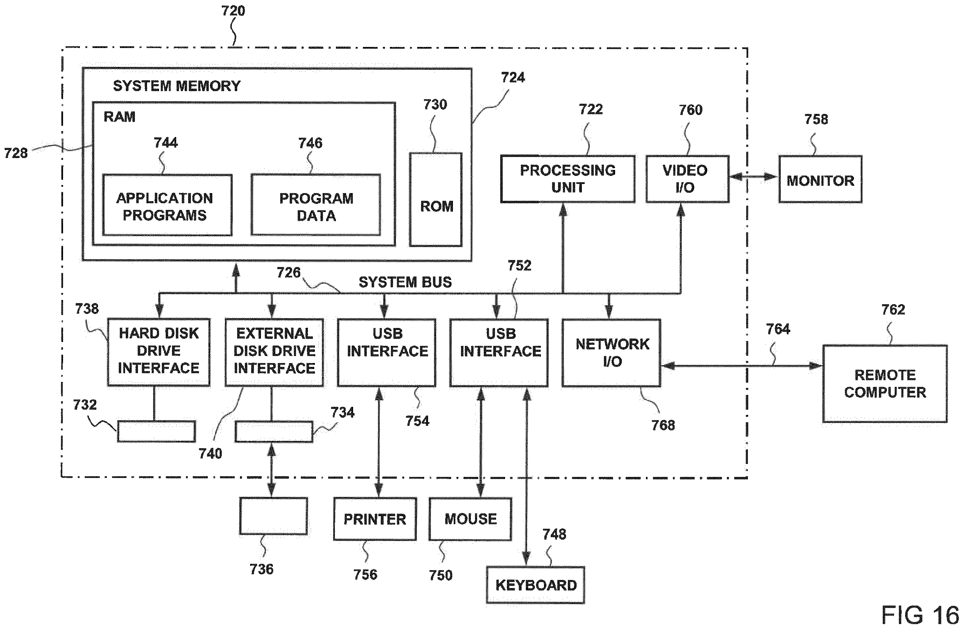

Figure 16 shows an exemplary system for implementing the claimed subject matter including a general-purpose computing device in the form of a conventional computing environment 720 (e.g. a personal computer). The conventional computing environment includes a processing unit 722, a system memory 724, and a system bus 726. The system bus couples various system components including the system memory 724 to the processing unit 722. The processing unit 722 may perform arithmetic, logic and/or control operations by accessing the system memory 724. The system memory 724 may store information and/or instructions for use in combination with the processing unit 722. The system memory 724 may include volatile and nonvolatile memory, such as a random-access memory (RAM) 728 and a read only memory (ROM) 730. A basic input/output system (BIOS) containing the basic routines that helps to transfer information between elements within the personal computer 720, such as during start-up, may be stored in the ROM 730. The system bus 726 may be any of several types of bus structures including a memory bus or memory controller, a peripheral bus, and a local bus using any of a variety of bus architectures.

The personal computer 720 may further include a hard disk drive 732 for reading from and writing to a hard disk (not shown), and an external disk drive 734 for reading from or writing to a removable disk 736. The removable disk may be a magnetic disk for a magnetic disk driver or an optical disk such as a CD-ROM for an optical disk drive. The hard disk drive 732 and the external disk drive 734 are connected to the system bus 726 by a hard disk drive interface 738 and an external disk drive interface 740, respectively. The drives and their associated computer-readable media provide nonvolatile storage of computer readable instructions, data structures, program modules and other data for the personal computer 720. The data structures may include relevant data for the implementation of the method for providing data from a directed graph to a language model. The relevant data may be organized in a database, for example a relational or object database.

Although the exemplary environment described herein employs a hard disk (not shown) and an external disk 736, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 736, ROM 730 or RAM 728, including an operating system (not shown), one or more application programs 744, other program modules (not shown), and program data 746. The application programs may include at least a part of the functionality as depicted in Figure 16.

A user may enter commands and information, as discussed below, into the personal computer 720 through input devices such as keyboard 748 and mouse 750. Other input devices (not shown) may include a microphone (or other sensors), joystick, game pad, scanner, or the like. These and other input devices may be connected to the processing unit 722 through a serial port interface 752 that is coupled to the system bus 726, or may be collected by other interfaces, such as a parallel port interface 754, game port or a universal serial bus (USB). Further, information may be printed using printer 756. The printer 756, and other parallel input/output devices may be connected to the processing unit 722 through parallel port interface 754. A monitor 758 or other type of display device is also connected to the system bus 726 via an interface, such as a video input/output 760. In addition to the monitor, computing environment 720 may include other peripheral output devices (not shown), such as speakers or other audible output.

The computing environment 720 may communicate with other electronic devices such as a computer, telephone (wired or wireless), personal digital assistant, television, or the like. To communicate, the computer environment 720 may operate in a networked environment using connections to one or more electronic devices. Figure 16 depicts the computer environment networked with remote computer 762. The remote computer 762 may be another computing environment such as a server, a router, a network PC, a peer device or other common network node, and may include many or all of the elements described above relative to the computing environment 720. The logical connections depicted in figure 16 include a local area network (LAN) 764 and a wide area network (WAN) 766. Such networking environments are commonplace in offices, enterprise-wide computer networks, intranets and the Internet and may particularly be encrypted.

When used in a LAN networking environment, the computing environment 720 may be connected to the LAN 764 through a network I/O 768. In a networked environment, program modules depicted relative to the computing environment 720, or portions thereof, may be stored in a remote memory storage device resident on or accessible to remote computer 762. Furthermore, other data relevant to the method for providing data from a directed graph to a language model (described above) may be resident on or accessible via the remote computer 762. It will be appreciated that the network connections shown are exemplary and other means of establishing a communications link between the electronic devices may be used.

The above-described computing system is only one example of the type of computing system that may be used to implement the method for providing data from a directed graph to a language model.

## Claims

1. A computer-implemented method for providing data from a directed graph to a language model, the method comprising:
defining a plurality of conditions and a plurality of patterns, wherein each of the conditions has at least one corresponding pattern;
receiving a subset (100) of the directed graph,
wherein the subset (100) of the directed graph includes a plurality of statements (112),
wherein each of the statements (112) includes a subject, an object and a predicate relating the subject to the object;
for each of the statements (112) in the subset (100) of the directed graph, performing the following:
when one of the conditions matches a respective statement and the pattern corresponding to the condition can be applied to the respective statement, computing a string from the respective statement using the pattern;
providing the computed strings as input to the language model.

2. The method of claim 1, wherein each of the conditions includes at least three condition variables,
wherein each of the condition variables corresponds to a different component of a statement;
wherein a first one of the condition variables matches the subject, a second one of the condition variables matches the predicate and a third one of the condition variables matches the object;
wherein at least one of the condition variables is bound to a value;
wherein each of the condition variables may specify an instance of a class or a literal.

3. The method of claim 1 or 2, wherein at least one of the conditions has a plurality of corresponding patterns;
wherein computing a string from the respective statement using the pattern comprises, computing a plurality of strings from the respective statement using each pattern corresponding to the condition that can be applied to the respective statement; or
wherein computing a string from the respective statement using the pattern comprises,
determining a random order of the patterns corresponding to the condition, and
computing a string from the respective statement using a first one in the random order of the patterns that can be applied to the respective statement.

4. The method of any one of the preceding claims, wherein each pattern includes one or more of the following:
at least one variable, wherein the variable specifies a class, an instance of a class, a literal or a predicate;
text, such as one or more articles;
at least one property that applies to the variable;
wherein each pattern may further include a language filter;
wherein the literal may specify a numeric value or text, wherein the literal may conform to a resource description framework schema class of literal values.

5. The method of any one of the preceding claims, wherein the patterns include at least one specific pattern and a plurality of default patterns;
when a condition corresponding to the specific pattern matches a respective statement and the specific pattern can be applied to the respective statement, computing a string from the respective statement comprises using the specific pattern;
when the condition corresponding to the specific pattern does not match the respective statement, determining whether a condition corresponding to one of the default patterns matches the respective statement; and
when the condition corresponding to one of the default patterns matches the respective statement, computing a string from the respective statement using the one of the default patterns;
wherein defining the plurality of conditions and the plurality of patterns may further comprise defining at least three conditions and at least three patterns.

6. The method of claim 5,
wherein the at least one specific pattern includes a plurality of specific patterns, wherein each of the specific patterns is applicable to a group of directed graphs defined according to the resource description framework or a group of knowledge graphs defined according to the resource description framework;
wherein each of the default patterns is applicable to any directed graph defined according to the resource description framework or any knowledge graph defined according to the resource description framework.

7. The method of any one of the preceding claims,
wherein the subset (100) of the directed graph is the entire directed graph, or
wherein the subset (100) of the directed graph is determined by means of a query of the directed graph;
wherein receiving the subset (100) of the directed graph may include receiving a reference to the subset (100) and retrieving the subset (100) using the reference.

8. The method of any one of the preceding claims,
wherein the subset (100) of the directed graph includes a plurality of nodes connected by edges;
wherein the subject corresponds to a node, the object corresponds to a node and an edge for the predicate connects the subject to the object.
wherein the nodes have corresponding classes, such that each of the nodes has a corresponding class;
wherein the classes may be organized in a schema,
wherein the schema may be defined using the resource description framework or the web ontology language.

9. The method of claim 8,
wherein each statement is identified by at least one uniform resource identifier;
wherein at least one of the nodes and edges is identified by a uniform resource identifier;
wherein the directed graph is represented using the resource description framework;
wherein the directed graph is a knowledge graph.

10. The method of any one of the preceding claims, further comprising:
receiving one or more rules corresponding to the subset (100) of the directed graph;
materializing the subset (100) of the directed graph by applying the rules to the plurality of statements (112) to compute additional statements.

11. The method of any one of the preceding claims, further comprising:
sorting the subset (100) of the directed graph such that nodes are grouped together with their neighbors, wherein the sorting may comprise:
determining a list of nodes in the subset (100) of the directed graph;
adding a randomly selected node to a new list of nodes;
for each node in the new list of nodes, determining the connected nodes;
for each of the connected nodes, if the respective node is in the subset (100) of the directed graph, adding the respective node to the list of nodes;
removing the node from the list of nodes.

12. The method of any one of the preceding claims,
wherein the language model is a probability distribution over sequences of words;
wherein the language model is a large language model.

13. A computer program comprising instructions that, when the program is executed by a computer, cause the computer to carry out the method of any one of the preceding claims.

14. A computer-readable medium storing the computer program of claim 13.

15. A computer system for providing data from a directed graph to a language model, comprising:
a database (136) storing a directed graph;
a software service (134) configured to:
define a plurality of conditions and a plurality of patterns, wherein each of the conditions has at least one corresponding pattern;
receive a subset (100) of the directed graph from the database (136),
wherein the subset (100) of the directed graph includes a plurality of statements (112),
wherein each of the statements (112) includes a subject, an object and a predicate relating the subject to the object;
for each of the statements (112) in the subset (100) of the directed graph, perform the following:
when one of the conditions matches a respective statement and the pattern corresponding to the condition can be applied to the respective statement, compute a string from the respective statement using the pattern;
provide the computed strings as input to the language model.
